# EUROPÄISCHE PATENTSCHRIFT

(11) **EP 3 480 073 B1**
(45) Veröffentlichungstag und Bekanntmachung des Hinweises auf die Patenterteilung: **21.02.2024**
(21) Anmeldenummer: 18181076.3
(22) Anmeldetag: 02.07.2018
(51) Int. Cl.: B60W 10/08, B60W 10/18, B60W 30/18, B60W 50/08

(54) **VERFAHREN ZUM BETRIEB EINES KRAFTFAHRZEUGS UND KRAFTFAHRZEUG**
MOTOR VEHICLE AND METHOD FOR OPERATING A MOTOR VEHICLE
PROCÉDÉ DE FONCTIONNEMENT D'UN VÉHICULE AUTOMOBILE ET VÉHICULE AUTOMOBILE

(30) Priorität: 06.11.2017 DE 102017219675
(43) Veröffentlichungstag der Anmeldung: 08.05.2019
(73) Patentinhaber: AUDI AG, 85045 Ingolstadt (DE)
(72) Erfinder: Hornischer, Jörg, 85139 Wettstetten (DE); Eichner, Roberth, 85051 Ingolstadt (DE)

(56) Entgegenhaltungen:
- EP-A1- 3 213 972
- EP-A2- 0 375 162
- WO-A1-2014/188103
- DE-A1- 10 221 835
- DE-A1-102009 037 182
- FR-A1- 2 825 327
- US-A1- 2015 224 976
- US-A1- 2016 016 469

## Beschreibung

Die Erfindung betrifft ein Verfahren zum Betrieb eines Kraftfahrzeugs umfassend einen Traktionselektromotor, wobei der Traktionselektromotor zur Erzeugung eines eine langsame Bewegung des Kraftfahrzeugs erwirkenden Kriechmomentes ansteuerbar ist. Weiterhin betrifft die Erfindung ein Kraftfahrzeug.

Fahrer von Fahrzeugen, welche einen Verbrennungsmotor sowie ein Automatikgetriebe aufweisen, sind bezüglich des Anfahrens und Anhaltens ein bestimmtes Verhalten des Fahrzeuges gewohnt. Dazu gehört beispielsweise das sogenannte Kriechen, also das Vorliegen eines Kriechmomentes bei Nichtbetätigung eines Gaspedals und Lösen der Bremsen, welches ein langsames Fahren des Kraftfahrzeugs zur Folge hat. Dieses Kriechmoment kann bei solchen Fahrzeugen aufgrund der Funktionsweise des Automatikgetriebes prinzipbedingt auftreten. Aus dem Stand der Technik sind verschiedene Verfahren bekannt, ein solches Kriechen nachzubilden oder zu verhindern.

So zeigt DE 102 00 991 A1 eine Kupplungsvorrichtung mit verbesserter Kriechfunktion, welche einen Kriechvorgang bewirken kann, bei dem von einer Antriebswelle auf eine Abtriebswelle des Kraftfahrzeugs ein im Wesentlichen geringes Moment übertragen wird. Die durch diese Kupplungsvorrichtung bereitgestellte Kriechfunktion ist dabei deaktivierbar und reaktivierbar, wobei sie so programmiert ist, dass sie ein Reaktivierungssignal erst aussenden kann, wenn die Anwesenheit eines Fahrers im Kraftfahrzeug detektiert ist.

DE 10 2012 015 872 A1 offenbart ein Verfahren zur Steuerung eines Kriechmodus bei Fahrzeugen mit Elektromotor. Dabei ist der Kriechmodus über ein Fahrpedalsignal oder ein Bremspedalsignal aktivierbar. Bei aktiviertem Kriechmodus bewegt sich das Fahrzeug aus dem Stand fort, ohne dass dabei das Fahrpedal betätigt wird. Die Fortbewegung im Kriechmodus kann über das Bremspedal kontrolliert werden.

In DE 10 2016 116 328 A1 werden Verbesserungen im Zusammenhang mit einem Kriechmoment vorgeschlagen. Dabei wird ein System zum Bereitstellen von elektrischem Kriechen in einem Fahrzeug mit Schaltgetriebe vorgeschlagen. Das Fahrzeug umfasst dazu einen Elektromotor zum Bereitstellen von Antriebskraft niedriger Geschwindigkeit für das Fahrzeug sowie eine Steuereinheit, welche dazu konfiguriert ist, den Verbrennungsmotor auszuschalten wenn die elektrische Kriechfunktion aktiviert ist. Die Aktivierung der elektrischen Kriechfunktion kann bei Betätigung eines Fahrpedals oder eines Kupplungspedals aufgehoben werden.

DE 10 2009 037 182 A1 beschreibt ein Verfahren zum Steuern oder Regeln des Kriechmoments eines Fahrzeugs mit Elektroantrieb, wobei mittels des Elektroantriebs ein von der Bremsstärke, mit der das Fahrzeug gebremst wird, abhängendes Kriechmoment erzeugt wird. Eine Einstellung des Kriechmoments erfolgt dabei als eine Reduktion des Kriechmoments in Abhängigkeit der Bremsstärke bzw. einer Bremsanforderung oder einer Geschwindigkeit, mit der das Bremspedal von einem Benutzer des Kraftfahrzeuges betätigt wird. Dadurch wird vermieden, dass über den Elektromotor des Kraftfahrzeuges ein Kriechmoment erzeugt wird, das aufgrund der Bremsbetätigung durch ein entgegenwirkendes, von der Bremsanlage gestelltes Bremsmoment wieder kompensiert wird.

DE 102 21 835 A1 beschreibt ein Verfahren zum Betrieb eines Kraftfahrzeugs umfassend einen Traktionselektromotor.

Der Erfindung liegt die Aufgabe zugrunde, ein demgegenüber verbessertes Verfahren zum Betrieb eines Kraftfahrzeugs anzugeben.

Diese Aufgabe wird erfindungsgemäß durch ein Verfahren gemäß Anspruch 1 gelöst.

Dies ermöglicht es vorteilhaft, das Verhalten des Kraftfahrzeuges an die Erwartungen oder die Vorlieben eines Fahrers anzupassen. Es kann so bei einem Fahrzeug mit Elektroantrieb das gewohnte Verhalten eines konventionellen, mit einem Verbrennungsmotor betriebenen Kraftfahrzeugs mit Automatikgetriebe nachgebildet werden. Dabei können verschiedene, unterschiedlich hohe Kriechmomente durch den Fahrer eingestellt werden. Die Höhe des eingestellten Kriechmomentes bestimmt dabei, wie schnell sich das Fahrzeug bei Nichtbetätigung des Gaspedals bewegt. Dabei ist es möglich, dass einzelne Kriechmomente in verschiedenen Höhen vorgegeben sind, aus denen der Fahrer eine Höhe auswählen und einstellen kann oder es kann ein Bereich zwischen einem minimalen Kriechmoment und einem maximalen Kriechmoment vorgegeben sein, innerhalb dem der Fahrer ein beliebiges Kriechmoment einstellen kann. Selbstverständlich kann auch vorgesehen sein, dass der Fahrer die Kriechfunktion abstellen kann, mithin also auswählen kann, dass kein Kriechmoment erzeugt werden soll.

Eine Erzeugung des Kriechmomentes kann beispielsweise dadurch erfolgen, dass eine Ansteuerung des Traktionsmotors bei Nichtbetätigung des Gaspedals erfolgt. Dazu kann das Kraftfahrzeug ein Steuergerät umfassen, welches dazu ausgebildet ist, den Traktionsmotor zur Erzeugung eines eine langsame Bewegung des Kraftfahrzeugs erwirkenden Kriechmomentes anzusteuern. Die Ansteuerung erfolgt dabei derart, dass die vom Fahrer des Kraftfahrzeugs eingestellte Höhe des Kriechmomentes erzeugt wird.

Erfindungsgemäß kann vorgesehen sein, dass bei Erfüllung einer weiteren Einstellbedingung und bei Vorliegen eines Kriechmomentes bei einer Betätigung einer Bremsanlage des Kraftfahrzeugs das Kriechmoment deaktiviert wird. Die weitere Einstellbedingung kann erfüllt oder nicht erfüllt sein, wobei dies durch einen Fahrer des Kraftfahrzeugs einstellbar ist. Er kann mithin also wählen, ob er die Funktion aktivieren oder deaktivieren möchte. Bei einer erfüllten weiteren Einstellbedingung, also bei einer aktivierten Funktion, wird bei Vorliegen eines Kriechmomentes und bei der Betätigung der Bremsanlage des Kraftfahrzeugs das Kriechmoment deaktiviert. Eine Betätigung der Bremsanlage kann beispielsweise vorliegen, wenn der Fahrer ein Bremspedal betätigt und/oder eine Feststellbremse aktiviert. Eine Betätigung der Bremsanlage des Kraftfahrzeugs kann ebenfalls vorliegen, wenn eine oder mehrere Radbremsen und/oder die Feststellbremse des Kraftfahrzeuges durch ein Fahrerassistenzsystem automatisch aktiviert werden. Dies ermöglicht es vorteilhaft, dass das Kriechmoment deaktiviert wird, also die langsame Bewegung des Kraftfahrzeuges unterbunden wird, während eine Betätigung der Bremsanlage des Kraftfahrzeugs vorliegt. Dadurch wird ermöglicht, dass das Fahrzeug auch nur bei einer einmaligen, kurzen Betätigung des Bremspedals oder einer Feststellbremse aufhört, sich aufgrund des Kriechmomentes zu bewegen und nicht durch eine dauerhafte Betätigung des Bremspedals oder der Feststellbremse gegen das Kriechmoment im Stillstand gehalten werden muss. Das Kraftfahrzeug kann also, beispielsweise im Stau oder vor einer roten Ampel, durch ein einmaliges Betätigen der Bremsanlage durch eine Deaktivierung des Kriechmomentes an einem weiteren Vortrieb gehindert werden, wenn die weitere Einstellbedingung erfüllt ist, also diese Funktion durch den Fahrer des Kraftfahrzeugs aktiviert wurde.

Weiterhin kann erfindungsgemäß vorgesehen sein, dass zusätzlich wenigstens eine Bremse der Bremsanlage des Kraftfahrzeugs aktiviert wird. Dies ermöglicht es, dass auch nach eine nur einmaligen Betätigung der Bremsanlage dauerhaft wenigstens eine Bremse der Bremsanlage des Kraftfahrzeugs aktiviert bleibt, so dass ein Wegrollen des Fahrzeuges vermieden wird. Es können dazu ein oder mehrere der Radbremsen und/oder die Feststellbremse des Kraftfahrzeugs aktiviert werden. Dadurch wird sichergestellt, dass das Fahrzeug sich nach einer Betätigung der Bremsanlage des Kraftfahrzeugs nicht selbstständig bewegt, weder durch ein Kriechmoment noch durch ein unbeabsichtigtes Wegrollen des Kraftfahrzeugs, so dass eine das Fahrzeug nach einer einmaligen Betätigung der Bremsanlage im Stillstand haltende Autohold-Funktion vorliegt.

Erfindungsgemäß ist vorgesehen, dass bei Erfüllung einer Einstellbedingung sowie in Abhängigkeit einer eine Fahrzeugneigung beschreibenden Neigungsinformation und einer einen Betriebszustand des Kraftfahrzeugs beschreibenden Zustandsinformation wenigstens eine Bremse der Bremsanlage des Kraftfahrzeugs aktiviert wird. Die Einstellbedingung kann erfüllt oder nicht erfüllt sein, wobei eine Erfüllung vorliegt, wenn der Fahrer des Kraftfahrzeugs eine entsprechende Einstellung, also eine Aktivierung der Funktion vornimmt. Wenn diese Einstellbedingung erfüllt ist und weiterhin die Neigungsinformation eine aktuell vorliegende Neigung des Fahrzeugs beschreibt, so wird wenigstens eine Bremse der Bremsanlage des Kraftfahrzeugs aktiviert, wenn die einen Betriebszustand des Kraftfahrzeugs beschreibende Zustandsinformation beispielsweise beinhaltet, dass das Fahrzeug sich nicht mehr oder nur noch mit der durch ein Kriechmoment erzeugten Geschwindigkeit vorwärtsbewegt und/oder keine Betätigung eines Gaspedals des Kraftfahrzeugs vorliegt. Dadurch wird verhindert, dass das Kraftfahrzeug unbeabsichtigt bei einem Halten am Berg zurückrollt, da es durch die Aktivierung der wenigstens einen Bremse der Bremsanlage im Stillstand gehalten wird.

Erfindungsgemäß kann vorgesehen sein, dass die aktivierte Bremse bei Betätigung eines Gaspedals des Kraftfahrzeugs deaktiviert wird. Dadurch wird das automatische Halten des Kraftfahrzeugs im Stillstand beendet und das Fahrzeug kann sich entsprechend der Gaspedalbetätigung bewegen.

Erfindungsgemäß ist vorgesehen, dass die Höhe des Kriechmomentes und/oder die Einstellbedingung von einem Benutzer des Kraftfahrzeuges über eine Benutzerschnittstelle des Kraftfahrzeugs einstellbar ist. In einer bevorzugten Ausgestaltung der Erfindung ist vorgesehen, dass die weitere Einstellbedingung von einem Benutzer des Kraftfahrzeuges über die Benutzerschnittstelle des Kraftfahrzeugs einstellbar ist. Ein Benutzer des Kraftfahrzeuges, beispielsweise der Fahrer, kann dabei das Fahrzeugverhalten an seine Erwartungen und seine Vorlieben anpassen. Er kann verschiedene Höhen des Kriechmomentes einstellen oder das Kriechmoment aktivieren und/oder die Autoholdfunktion durch Erfüllung der weiteren Einstellbedingung aktivieren und/oder das Verhindern des Zurückrollens bei Vorliegen einer Fahrzeugneigung durch Erfüllung der Einstellbedingung aktivieren.

Für die Benutzerschnittstelle kann erfindungsgemäß vorgesehen sein, dass sie wenigstens einen binären Schalter und/oder einen Wahlschalter und/oder einen Touchscreen und/oder eine Vorrichtung zur Spracheingabe umfasst. Ein binärer Schalter kann dabei zwischen zwei Schaltzuständen geschaltet werden, wodurch eine Einstellbedingung erfüllt oder nicht erfüllt, also eine Funktion aktiviert oder deaktiviert werden kann. Ein Wahlschalter ermöglicht hingegen mehr als zwei Schaltzustände, so dass beispielsweise über einen Wahlschalter zwischen den verschiedenen Höhen des Kriechmomentes gewählt werden kann. Es ist auch möglich, dass die Aktivierung oder Deaktivierung der Funktionen und/oder die Einstellung des Kriechmomentes über einen Touchscreen und/oder über eine Vorrichtung zur Spracheingabe erfolgt.

Für ein erfindungsgemäßes Kraftfahrzeug ist vorgesehen, dass es einen Traktionselektromotor umfasst, wobei das Kraftfahrzeug zur Durchführung eines erfindungsgemäßen Verfahrens eingerichtet ist.

Weitere Vorteile und Einzelheiten der Erfindung ergeben sich aus den Ausführungsbeispielen sowie anhand der Zeichnungen. Dabei zeigen:
- Fig. 1: eine schematische Seitenansicht eines erfindungsgemäßen Kraftfahrzeuges, sowie
- Fig. 2: ein Blockdiagramm eines erfindungsgemäßen Verfahrens.

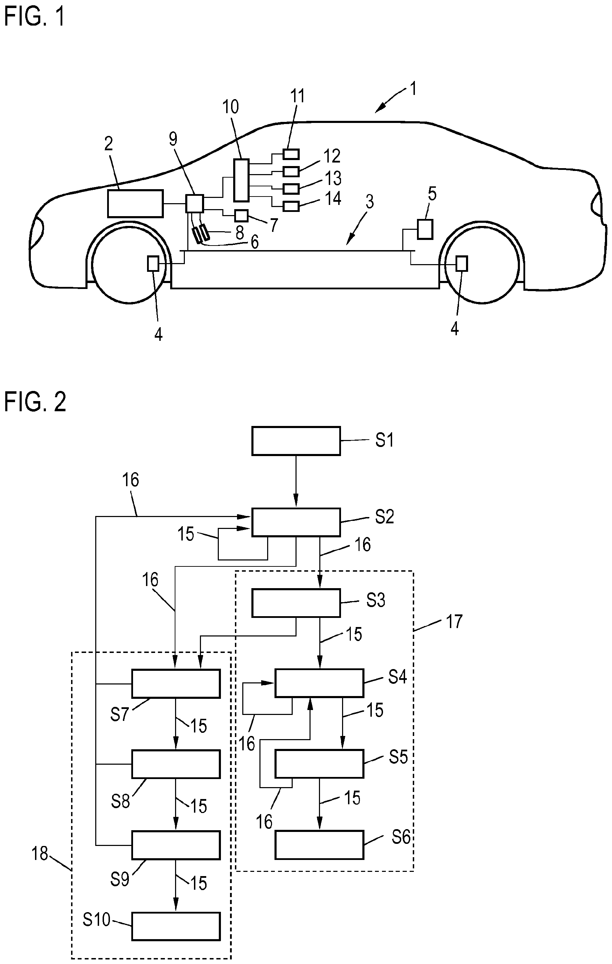

In Fig. 1 ist eine schematische Seitenansicht eines erfindungsgemäßen Kraftfahrzeugs 1 dargestellt. Das Kraftfahrzeug 1 umfasst einen Traktionselektromotor 2, welcher zum Antrieb des Kraftfahrzeuges 1 dient. Weiterhin umfasst das Kraftfahrzeug 1 eine Bremsanlage 3, welche jeweils an einem Rad des Kraftfahrzeugs 1 angeordnete Radbremsen 4 sowie eine an einer Hinterachse des Kraftfahrzeugs 1 angeordnete Feststellbremse 5 umfasst. Eine Betätigung der Bremsanlage 3, welche ein Aktivieren der Radbremsen 4 zur Folge hat, kann über ein Bremspedal 6 erfolgen. Zur manuellen Betätigung der Feststellbremse 5 kann weiterhin ein Handbremshebel 7 vorgesehen sein.

Der Traktionselektromotor 2 kann über ein Gaspedal 8 gesteuert werden. Zur Durchführung eines erfindungsgemäßen Verfahrens ist ein Steuergerät 9 vorgesehen, welches beispielsweise als Teil eines Motorsteuergerätes ausgeführt sein kann. Das Kraftfahrzeug 1 umfasst weiterhin eine Benutzerschnittstelle 10, welche zur Aktivierung von Funktionen und/oder zur Einstellung der Höhe eines Kriechmomentes einen oder mehrere binäre Schalter 11 und/oder einen Wahlschalter 12 umfasst. Zusätzlich oder alternativ dazu kann eine Aktivierung von Funktionen und/oder einer Einstellung der Höhe eines Traktionselementes auch über einen Touchscreen 13 der benutzten Schnittstelle 10 und/oder über eine Vorrichtung zur Spracheingabe 14 der Benutzerschnittstelle 10 erfolgen.

Durch eine Ansteuerung des Traktionselektromotors 2 durch das Steuergerät 9 kann abhängig von der von einem Benutzer des Kraftfahrzeugs 1 vorgenommenen Einstellung ein Kriechmoment erzeugt werden, welches eine langsame Bewegung des Kraftfahrzeugs 1 erwirkt. Eine Einstellung der Höhe des Kriechmoments kann dabei über die Benutzerschnittstelle 10 des Kraftfahrzeugs erfolgen.

In Fig. 2 ist ein Blockdiagramm eines Ausführungsbeispiels eines erfindungsgemäßen Verfahrens dargestellt. Dabei stellen die angegebenen Schritte Folgendes dar:

| | |
|---|---|
| S1 | Start |
| S2 | Überprüfung Betätigung Gaspedal |
| S3 | Aktivierung des Kriechmoments |
| S4 | Überprüfung Betätigung Bremsanlage |
| S5 | Überprüfung der weiteren Einstellbedingung |
| S6 | Deaktivierung des Kriechmoments |
| S7 | Überprüfung der Einstellbedingung |
| S8 | Überprüfen der Neigungsinformation |
| S9 | Überprüfen der Zustandsinformation |
| S10 | Aktivierung der Bremsanlage |

Das Verfahren startet in Schritt S1 bei Beginn des Betriebes des Kraftfahrzeuges. Der Beginn des Betriebes kann beispielsweise bei Betätigung einer Zündung, eines Startknopfes oder Ähnlichem erfolgen.

In Schritt S2 wird während des Betriebes fortlaufend überprüft, ob eine Betätigung des Gaspedales vorliegt. Ist dies der Fall, so wird, wie durch den Ja-Pfeil 15 angedeutet, mit der fortlaufenden Überprüfung, ob eine Betätigung des Gaspedales 8 vorliegt, fortgefahren. Liegt keine Betätigung des Gaspedales 8 vor, so wird wie durch den Nein-Pfeil 16 dargestellt in einem ersten Ast 17 des Verfahrens mit Schritt S3 fortgefahren.

In Schritt S3 erfolgt eine Aktivierung des Kriechmomentes in Abhängigkeit der von dem Fahrer eingestellten Höhe. Liegt eine eingestellte Höhe des Kriechmomentes vor, so wird mit Schritt S4 fortgefahren.

In Schritt S4 erfolgt der Betrieb des Kraftfahrzeuges durch das Kriechmoment. Das Kraftfahrzeug 1 bewegt sich folglich aufgrund des vom Traktionsmotor 2 erzeugten Kriechmomentes in einer langsamen Bewegung vorwärts. Während des Schrittes S4 wird fortlaufend überprüft, ob eine Betätigung der Bremsanlage 3 vorliegt. Eine Betätigung der Bremsanlage 3 kann beispielsweise dadurch erfolgen, dass der Fahrer das Bremspedal 6 und/oder den Handbremshebel 7 betätigt. Liegt keine solche Betätigung der Bremsanlage 3 vor, so wird wie durch den Pfeil 16 angedeutet fortwährend die Bedingung des Schrittes S4 überprüft. Liegt eine Betätigung der Bremsanlage 3 vor, so wird mit Schritt S5 fortgefahren.

In Schritt S5 wird überprüft, ob die weitere Einstellbedingung erfüllt ist. Die weitere Einstellbedingung ist erfüllt, wenn der Fahrer die entsprechende Autohold-Funktion über die Benutzerschnittstelle 10 des Kraftfahrzeuges 1 aktiviert hat. Ist die weitere Einstellbedingung nicht erfüllt bzw. die Funktion deaktiviert, so wird das Kriechmoment nicht deaktiviert und es wird mit Schritt S4 fortgefahren. Ist die weitere Einstellbedingung erfüllt, so erfolgt in Schritt S6 die Deaktivierung des Kriechmomentes. Optional kann dabei in Schritt S6 zusätzlich auch bei einer nur einmaligen Betätigung der Bremsanlage 3 eine dauerhafte Aktivierung der Bremsanlage 3 vorgesehen sein. Eine Deaktivierung einer derart dauerhaft aktivierten Bremsanlage 3 erfolgt in diesem Fall, sobald das Gaspedal 8 betätigt wird.

Zusätzlich zu dem eine Autohold-Funktion beschreibenden, ersten Ast 17 des Verfahrens kann ein zweiter Ast 18 vorgesehen sein, welcher parallel zu dem Ast 17 ausgeführt werden kann.

Liegt in Schritt S2 keine Betätigung eines Gaspedales vor, so kann im zweiten Ast 18 mit Schritt S7 fortgefahren werden. Ebenso kann mit Schritt S7 fortgefahren werden, wenn in Schritt S3 fertiggestellt wird, dass kein Kriechmoment bzw. ein Kriechmoment mit einer Höhe von null eingestellt ist. In Schritt S7 wird überprüft, ob die Einstellbedingung erfüllt ist. Diese Einstellbedingung ist erfüllt, wenn der Fahrer die entsprechende Funktion, also die von dem zweiten Ast 18 beschriebene Funktion eines automatischen Haltens am Berg, aktiviert hat. Ist diese Einstellbedingung erfüllt, so wird mit Schritt S8 fortgefahren. In Schritt S8 wird überprüft, ob die eine Neigung des Kraftfahrzeugs beschreibende Neigungsinformation eine aktuell vorliegende Neigung des Kraftfahrzeuges beschreibt. Dazu kann beispielsweise überprüft werden, ob die Neigung des Kraftfahrzeuges einen vorgegebenen Grenzwert übersteigt. Ist dies der Fall, so wird in Schritt S9 anschließend überprüft, ob die Zustandsinformation beinhaltet, dass das Fahrzeug sich nicht mehr oder nur noch mit der durch ein Kriechmoment erzeugten Geschwindigkeit vorwärtsbewegt. Die Zustandsinformation kann weiterhin auch beschreiben, ob eine Betätigung des Gaspedales 8 vorliegt. Wenn keine Betätigung des Gaspedales 8 vorliegt und sich das Kraftfahrzeug nicht oder nur mit einer geringen Geschwindigkeit bewegt, so erfolgt in Schritt S10 die Aktivierung der Bremsanlage 3. Ein Zurückrollen des Kraftfahrzeuges 1 an einem Hang wird dadurch vermieden. Anschließend wird das Verfahren bei der Betätigung des Gaspedals 8 in Schritt S2 fortgesetzt. Ebenfalls in Schritt S2 fortgesetzt wird das Verfahren, wenn eine der Bedingungen in Schritt S7, Schritt S8 oder Schritt S9 als nicht erfüllt überprüft wird. Auch in diesem Fall wird das Verfahren in Schritt S2 fortgesetzt. Selbstverständlich ist es möglich, dass ein erfindungsgemäßes Verfahren auch nur einen der beiden Äste 17, 18 umfasst.

## Patentansprüche

1. Verfahren zum Betrieb eines Kraftfahrzeugs (1) umfassend einen Traktionselektromotor (2), wobei der Traktionselektromotor (2) zur Erzeugung eines eine langsame Bewegung des Kraftfahrzeugs (1) erwirkenden Kriechmomentes ansteuerbar ist, wobei mehrere unterschiedlich hohe Kriechmomente von einem Benutzer des Kraftfahrzeugs einstellbar sind, wobei von dem Benutzer ein Kriechmoment aus in verschiedenen Höhen vorgegebenen Kriechmomenten auswählbar ist oder wobei von dem Benutzer ein beliebiges Kriechmoment innerhalb eines Bereichs zwischen einem minimalen Kriechmoment und einem maximalen Kriechmoment auswählbar ist, wobei bei Erfüllung einer Einstellbedingung sowie in Abhängigkeit einer eine Fahrzeugneigung beschreibenden Neigungsinformation und einer einen Betriebszustand des Kraftfahrzeugs (1) beschreibenden Zustandsinformation wenigstens eine Bremse (4, 5) der Bremsanlage (3) des Kraftfahrzeugs aktiviert wird, wobei die Höhe des Kriechmomentes und die Einstellbedingung von einem Benutzer des Kraftfahrzeuges (1) über eine Benutzerschnittstelle (10) des Kraftfahrzeugs (1) einstellbar sind.

2. Verfahren nach Anspruch 1,
**dadurch gekennzeichnet,**
**dass** bei Erfüllung einer weiteren Einstellbedingung und bei Vorliegen eines Kriechmomentes bei einer Betätigung einer Bremsanlage (3) des Kraftfahrzeugs (1) das Kriechmoment deaktiviert wird.

3. Verfahren nach Anspruch 2,
**dadurch gekennzeichnet,**
**dass** zusätzlich wenigstens eine Bremse (4, 5) der Bremsanlage (3) des Kraftfahrzeugs aktiviert wird.

4. Verfahren nach Anspruch 2 oder 3,
**dadurch gekennzeichnet,**
**dass** die weitere Einstellbedingung von einem Benutzer des Kraftfahrzeuges (1) über die Benutzerschnittstelle (10) des Kraftfahrzeugs (1) einstellbar ist.

5. Verfahren nach einem der vorangehenden Ansprüche,
**dadurch gekennzeichnet,**
**dass** die aktivierte Bremse (4, 5) bei Betätigung eines Gaspedals (8) des Kraftfahrzeugs (1) deaktiviert wird.

6. Verfahren nach einem der vorangehenden Ansprüche,
**dadurch gekennzeichnet,**
**dass** die Benutzerschnittstelle (10) wenigstens einen binären Schalter (11) und/oder einen Wahlschalter (12) und/oder einen Touchscreen (13) und/oder eine Vorrichtung zur Spracheingabe (14) umfasst.

7. Kraftfahrzeug umfassend einen Traktionselektromotor (2), wobei das Kraftfahrzeug (1) zur Durchführung eines Verfahrens nach einem der vorangehenden Ansprüche eingerichtet ist.

## Claims

1. Method for operating a motor vehicle (1) comprising a traction electric motor (2), wherein the traction electric motor (2) can be actuated to generate a creep torque which brings about a slow movement of the motor vehicle (1), wherein a plurality of creep torques of different magnitudes can be set by a user of the motor vehicle, wherein a creep torque is selectable by the user from creep torques specified at different magnitudes, or wherein any creep torque within a region between a minimum creep torque and a maximum creep torque is selectable by the user, wherein at least one brake (4, 5) of the brake system (3) of the motor vehicle is activated when a setting condition is met and depending on inclination information that describes a vehicle inclination and status information that describes an operating state of the motor vehicle (1), wherein the magnitude of the creep torque and the setting condition can be set by a user of the motor vehicle (1) via a user interface (10) of the motor vehicle (1).

2. Method according to claim 1,
**characterised in that**
when a further setting condition is met and a creep torque is present, the creep torque is deactivated when a brake system (3) of the motor vehicle (1) is actuated.

3. Method according to claim 2,
**characterised in that**
at least one brake (4, 5) of the brake system (3) of the motor vehicle is additionally activated.

4. Method according to claim 2 or 3,
**characterised in that**
the further setting condition can be set by a user of the motor vehicle (1) via the user interface (10) of the motor vehicle (1).

5. Method according to any of the preceding claims,
**characterised in that**
the activated brake (4, 5) is deactivated when an accelerator pedal (8) of the motor vehicle (1) is actuated.

6. Method according to any of the preceding claims,
**characterised in that**
the user interface (10) comprises at least one binary switch (11) and/or a selector switch (12) and/or a touch screen (13) and/or a device for voice input (14).

7. Motor vehicle comprising a traction electric motor (2), wherein the motor vehicle (1) is designed to perform a method according to any of the preceding claims.

## Revendications

1. Procédé de fonctionnement d'un véhicule automobile (1) comprenant un moteur électrique de traction (2), dans lequel le moteur électrique de traction (2) peut être commandé pour la génération d'un couple de fluage obtenant un mouvement lent du véhicule automobile (1), dans lequel plusieurs couples de fluage de différent niveau sont réglables par un utilisateur du véhicule automobile, dans lequel un couple de fluage peut être sélectionné par l'utilisateur à partir de couples de fluage prédéfinis dans différents niveaux ou dans lequel un couple de fluage quelconque peut être sélectionné par l'utilisateur dans une plage entre un couple de fluage minimal et un couple de fluage maximal, dans lequel lors du remplissage d'une condition de réglage ainsi qu'en fonction d'une information d'inclinaison décrivant une inclinaison de véhicule et une information d'état décrivant un état de fonctionnement du véhicule automobile (1), au moins un frein (4, 5) de l'installation de freinage (3) du véhicule automobile est activé, dans lequel le niveau du couple de fluage et la condition de réglage sont réglables par un utilisateur du véhicule automobile (1) par le biais d'une interface utilisateur (10) du véhicule automobile (1).

2. Procédé selon la revendication 1,
**caractérisé en ce que**
lors du remplissage d'une autre condition de réglage et en présence d'un couple de fluage lors d'un actionnement d'une installation de freinage (3) du véhicule automobile (1), le couple de fluage est désactivé.

3. Procédé selon la revendication 2,
**caractérisé en ce que**
au moins un frein (4, 5) de l'installation de freinage (3) du véhicule automobile est en outre activé.

4. Procédé selon la revendication 2 ou 3,
**caractérisé en ce que**
l'autre condition de réglage est réglable par un utilisateur du véhicule automobile (1) par le biais de l'interface utilisateur (10) du véhicule automobile (1).

5. Procédé selon l'une quelconque des revendications précédentes,
**caractérisé en ce que**
le frein (4, 5) activé est désactivé lors de l'actionnement d'une pédale d'accélérateur (8) du véhicule automobile (1).

6. Procédé selon l'une quelconque des revendications précédentes,
**caractérisé en ce que**
l'interface utilisateur (10) comprend au moins un commutateur (11) binaire et/ou un bouton de sélection (12) et/ou un écran tactile (13) et/ou un dispositif de saisie vocale (14).

7. Véhicule automobile comprenant un moteur électrique de traction (2), dans lequel le véhicule automobile (1) est conçu pour la mise en oeuvre d'un procédé selon l'une quelconque des revendications précédentes.
